# EUROPEAN PATENT APPLICATION

(11) **EP 3 144 281 A1**
(43) Date of publication of application: **22.03.2017**
(21) Application number: 15185720.8
(22) Date of filing: 17.09.2015
(51) Int. Cl.: C02F 1/72, B01D 53/14, C02F 1/74, C02F 103/18, C02F 101/10, C02F 1/66, C02F 1/20, C02F 3/34, C02F 103/08

(54) **INTEGRATED AIR DISTRIBUTOR ARRANGEMENT FOR EFFLUENT SEAWATER TREATMENT BASIN**

(71) Applicant: General Electric Technology GmbH, 5400 Baden (CH)
(72) Inventor: Tabikh, Ali Mustapha, 35253 Växjö (SE); Papsai, Pal, 35263 Växjö (SE)
(74) Representative: General Electric Technology GmbH

(57) **Abstract**

A method of treating effluent seawater generated in the removal of sulfur dioxide from a process gas by contacting the process gas containing sulfur dioxide with seawater (46), using an integrated air distribution arrangement is provided. Additionally, an effluent seawater treatment system is provided that comprises a basin (54) for treating effluent seawater (ES) generated in the removal of sulfur dioxide from a process gas by contacting the process gas containing sulfur dioxide with seawater. Effluent seawater (ES) containing sulfite from a srubber tower (26) is introduced into the basin (54) by means of a horizontally extending distribution pipe (68) which is arranged below a fresh seawater supply via pipe (74) at an upstream wall (56) of the basin (54). Oxygen-containing gas is injected from channels (62) within a concrete bottom of the basin (54).

## Description

### Technical Field

The present disclosure relates to a method of treating effluent seawater generated in the removal of sulfur dioxide from a process gas by contacting the process gas containing sulfur dioxide with seawater, by using an integrated air distribution arrangement arranged within an effluent seawater treatment basin.

The present disclosure further relates to an integrated air distribution arrangement arranged within a concrete effluent seawater treatment basin useful for treating effluent seawater generated in the removal of sulfur dioxide from a process gas by contacting the process gas containing sulfur dioxide with seawater.

### Background Art

Process gases containing sulfur dioxide, SO₂, are generated in many industrial processes. One such industrial process is the combustion of a fuel, such as coal, oil, peat, waste, or the like in a combustion plant, such as a power plant. In such a power plant, a hot process gas, often referred to as a flue gas, is generated containing pollutants including acid gases, such as sulfur dioxide, SO₂. Removal of as much of such acid gases as possible from the flue gas is necessary before the flue gas may be released to the atmosphere or ambient air. Another example of an industrial process in which a process gas containing pollutants is generated is the electrolytic production of aluminum from alumina. In that process, flue gas containing sulfur dioxide, SO₂, is generated within venting hoods of electrolytic cells.

WO 2008/105212 discloses a boiler system comprising a boiler, a steam turbine system, and a seawater scrubber. The boiler generates, by combustion of a fuel, high-pressure steam utilized in the steam turbine system for generating electric power. Seawater is collected from the ocean, and is utilized as a cooling medium in a condenser of the steam turbine system. The seawater is then utilized in the seawater scrubber for absorbing sulfur dioxide, SO₂, from flue gas generated in the boiler. Sulfur dioxide, SO₂, is absorbed in the seawater and forms sulfite and/or bisulfite ions. Effluent seawater from the seawater scrubber is forwarded to an aeration pond. Air is bubbled through the effluent seawater in the aeration pond for oxidation of the sulfite and/or bisulfite ions to sulfate ions for release back to the ocean together with the effluent seawater. The sulfite and/or bisulfite ions are oxidized in the aeration pond to sulfate ions by means of oxygen gas contained in the air bubbled through the effluent seawater.

EP 2578544 A1 discloses a seawater oxidation basin system for treating effluent seawater. The disclosed oxidation basin system includes a first supply pipe for distributing an oxidation enhancing substance in the effluent seawater, a second supply pipe for distributing an oxidation enhancing substance in the effluent seawater, and a control device for controlling a first amount of oxidation enhancing substance supplied by one of the first and second supply pipes independently from a second amount of oxidation enhancing substance supplied by the other one of the first and second supply pipes.

JP 2012/115764 A discloses a seawater flue gas desulfurization system comprising a flue gas desulfurization tower in which a flue gas is brought into gas-liquid contact with seawater to carry out a desulfurization reaction of sulfur dioxide (SO₂) to sulfurous acid (H₂SO₃). A diluting mixing tank is provided at a lower side of the flue gas desulfurization absorption tower for mixing of sulfur-containing used seawater with fresh seawater for dilution of the sulfur-containing used seawater. Further, an oxidation tank is provided on a downstream side of the diluting mixing tank equipped with an aeration apparatus for carrying out water quality recovery treatment of the seawater used for dilution, and a wastewater channel. The wastewater channel has multiple steps of partition walls, the height of which are made to be successively lower from an upstream side to a downstream side.

WO 2013/146143 A1 discloses a seawater desulfurization and oxidation treatment device including an oxidation/aeration tank for performing water quality restoration treatment on acid desulfurization seawater containing sulfurous acid (H₂SO₃). This acid desulfurization seawater is generated by subjecting exhaust gas from a boiler to seawater desulfurization, using dilution seawater and air. The oxidation/aeration tank is configured comprising a main flow path having an upstream-side weir formed on the inlet side in the longitudinal direction of the oxidation/aeration tank into which the dilution seawater is introduced. The oxidation/aeration tank also includes an upstream-side mixing portion formed on the upstream side from the upstream-side weir for mixing the acid desulfurization seawater with the dilution water while introducing the acid desulfurization seawater therein. A sub flow path supplies the dilution water detoured from the upstream - side mixing portion of the oxidation/aeration tank, to post-dilute the acid desulfurization seawater oxidized and aerated in the oxidation aeration tank.

The above background prior art illustrates the fact that generally seawater treatment plant designs provide for flat bottomed basins/ponds equipped with air blowers and piping for maintaining oxidation air, and a weir downstream of the aeration basin followed by a discharge basin/pond/channel. Further, seawater treatment basins are in general designed to have two different zones: a mixing zone for the mixing of absorber effluent seawater and fresh seawater for dilution; and an aeration zone equipped with air blowers and piping for seawater sulfite oxidation. In the interest of reducing capital expenses and operational expenses associated with seawater treatment plants, new methods and systems for treating effluent seawater are needed.

### Summary of the Disclosure

The present disclosure relates to a method of treating effluent seawater generated in the removal of sulfur dioxide from a process gas by contacting the process gas containing sulfur dioxide with seawater, using an integrated air distribution arrangement arranged within a concrete effluent seawater treatment basin. The present disclosure further relates to an integrated air distribution arrangement arranged within a concrete effluent seawater treatment basin for treating effluent seawater generated in the removal of sulfur dioxide from a process gas by contacting the process gas containing sulfur dioxide with seawater. As such, the subject method and system for treating effluent seawater uses an integrated air distribution arrangement arranged within a concrete effluent seawater treatment basin for both mixing the effluent seawater with fresh seawater and oxidizing the effluent seawater. The subject integrated air distribution arrangement arranged within a concrete effluent seawater treatment basin provides a more cost efficient system as compared to the above noted prior art systems with respect to both capital investment and operation expenses associated therewith.

According to the subject disclosure, a system for treating effluent seawater generated in the removal of sulfur dioxide from a process gas by contacting the process gas containing sulfur dioxide with seawater, using an integrated air distribution arrangement arranged within a concrete effluent seawater treatment basin is provided. As such, the subject effluent seawater treatment basin comprises a basin with a flat bottom area, a combined flat bottom area and inclined bottom area including but not limited to a "stair-stepped" bottom area, or an inclined bottom area, of approximately 30 meters to approximately 50 meters in length surrounded on its periphery by four side walls each of the same height or of varying heights, each measuring approximately 3 meters to approximately 6 meters in height. As fresh seawater flows downstream within the subject effluent seawater treatment basin, effluent seawater is supplied into an upstream end of the treatment basin for downstream flow therein. As such, effluent seawater is supplied to the treatment basin through an effluent seawater distribution pipe. Effluent seawater flowing from the effluent seawater distribution pipe is contacted by an oxidation agent such as air, oxygen or other oxygen source supplied to the treatment basin through an integrated air distribution arrangement arranged within the bottom, and optionally, also the side walls of the concrete treatment basin. The subject integrated air distribution arrangement comprises at least one, but more preferably a plurality of about 4 to about 10 channels formed in the cement during construction of the concrete treatment basin. The channels may be formed in a surface of the cement bottom and, optionally, also in an interior surface of the cement walls during construction of the concrete treatment basin. After construction of the concrete treatment basin, the channels of the integrated air distribution arrangement are covered with perforated plates and fluidly connected to an oxidation agent supply. The oxidation agent supply supplies an oxidation agent through the channels of the integrated air distribution arrangement for release thereof through perforations in the perforated plates covering the channels. The oxidation agent released through the perforations contact and mix with the effluent seawater flowing through the treatment basin for sulfite oxidation efficiency in the treatment of the effluent seawater. Treatment basin sulfite oxidation efficiency may be monitored and controlled with the use of one or more sulfite sensors and a control device. Because the subject integrated air distribution arrangement does not impact the topography of the bottom of the treatment basin as does prior art aeration piping, the subject integrated air distribution arrangement does not contribute to total water pressure drop within the treatment basin as does prior art aeration piping. Further, the manufacturing and erection costs of the subject integrated air distribution arrangement are significantly less than those of prior art aeration piping. Still further, the subject integrated air distribution arrangement does not require design restrictions, such as spare spacing for maintenance of aeration pipes and grid modules as does prior art aeration piping. For these reasons, in addition to others, the subject integrated air distribution arrangement requires significantly less capital investment, and less operating expense, while increasing treatment basin design flexibility, and providing efficient oxidation agent distribution and mixing across the entire cross section of the treatment basin.

Within the treatment basin, one or more sensors are used to obtain measurements electronically relayed to a control device for control of effluent seawater treatment parameters. Control of the treatment parameters within the treatment basin enables adjustments to the pH and the dissolved oxygen concentration of the effluent seawater prior to effluent seawater discharge back to the ocean. Adjustments to the pH and the dissolved oxygen concentration of the effluent seawater enables regulatory compliance of the effluent seawater discharged back to the ocean.

According to the subject disclosure, a method for treating effluent seawater generated in the removal of sulfur dioxide from a process gas by contacting the process gas containing sulfur dioxide with seawater, using an integrated air distribution arrangement arranged in an effluent seawater treatment basin is provided. As such, the subject method comprises constructing a concrete treatment basin with a bottom approximately 30 meters to approximately 50 meters in length surrounded on its periphery by four walls, each of the same or of differing heights, with each wall approximately 3 meters to approximately 6 meters in height, forming channels in a bottom surface and, as an option, in interior wall surfaces during cement construction of the concrete treatment basin, covering the channels with perforated covers, supplying an oxidation agent to the channels for release of the oxidation agent through perforations in the perforated covers for oxidation agent distribution and mixing with effluent seawater flowing through the treatment basin for sulfite oxidation treatment of the effluent seawater therein.

The subject method likewise includes use of one or more sensors within the treatment basin to obtain measurements electronically relayed to a control device for control of effluent seawater treatment parameters. Control of the effluent seawater treatment parameters within the treatment basin enables adjustments to the pH and the dissolved oxygen concentration of the effluent seawater prior to effluent seawater discharge back to the ocean. Adjustments to the pH and the dissolved oxygen concentration of the effluent seawater enables regulatory compliance of the effluent seawater discharged back to the ocean.

In summary, the subject method of treating effluent seawater generated in removing sulfur dioxide from a process gas by contacting the process gas containing sulfur dioxide with seawater comprises supplying fresh seawater to a basin for a flow thereof downstream through the basin, supplying the effluent seawater to the basin for a flow of the effluent seawater in the flow of fresh seawater, and spraying an oxidation agent from one or more channels arranged within a concrete bottom of the basin for oxidation agent contact with the flow of effluent seawater to produce neutralized effluent seawater prior to environmental release thereof. As such, the effluent seawater is supplied to the basin from an effluent seawater distribution pipe horizontally arranged within the basin, vertically below a supply of the fresh seawater to the basin. The oxidation agent supplied to the basin is one or more members selected from the group consisting of air, oxygen, and an oxygen source. The basin itself comprises a bottom that is flat, flat and inclined including but not limited to a stair-stepped bottom, or inclined surrounded by an upstream wall, two opposed side walls and a downstream wall that define an interior area of the basin. Within the interior area of the basin, fresh seawater, effluent seawater and oxidation agent are mixed to provide pH recovery with decarboxylation and oxygenation to produce neutralized effluent seawater for environmental release. For such purpose, one or more water quality sensors are arranged within the basin in direct contact with the effluent seawater therein, for use to control effluent seawater treatment parameters. As such, a control unit receives signals from the one or more water quality sensors arranged within effluent seawater in the basin and based on the signals received, the control unit controls one or more parameters of effluent seawater treatment.

In summary, the subject effluent seawater treatment system for treating an effluent seawater generated in a wet scrubber in which a process gas is brought into contact with seawater for removal of sulfur dioxide from said process gas, comprises a basin comprising a fresh seawater supply supplying fresh seawater at an upstream wall of the basin for downstream flow thereof within the basin, an effluent seawater supply horizontally arranged vertically below the fresh seawater supply parallel to the upstream wall of the basin for supplying effluent seawater into the downstream flow of fresh seawater, and an oxidation agent supply fluidly connected to channels formed in a concrete bottom, and optionally sides, of the basin for oxidation agent release into and contact with the flow of effluent seawater in the basin to produce therefrom neutralized effluent seawater prior to environmental release thereof. As such, the effluent seawater supply is an effluent seawater distribution pipe with a plurality of perforations therethrough horizontally arranged adjacent and parallel to the upstream wall of the basin for effluent seawater supply to the basin. The oxidation agent supplied to the basin is one or more members selected from the group consisting of air, oxygen, and an oxygen source. Further, the oxidation agent supply is fluidly connected to one or more channels extending between opposed side walls of the basin, with each such channel covered with a perforated cover comprising perforations through the thickness thereof for release of oxidation agent through the perforations and into the effluent seawater flowing in the basin. As such, the flow of the fresh seawater, effluent seawater and oxidation agent within the basin provides pH recovery with decarboxylation and oxygenation to produce therefrom neutralized effluent seawater for environmental release. Also used in the basin are one or more water quality sensors arranged in contact with the effluent seawater within the basin for use to control effluent seawater treatment parameters. Accordingly, a control unit receives signals from the one or more water quality sensors arranged in contact with the effluent seawater within the basin, and based on the signals received by the control unit from the one or more water quality sensors, the control unit controls one or more parameters of effluent seawater treatment. For efficiency and to reduce costs associated with the subject treatment basin, the subject oxidation agent supply is fluidly connected to a system of channels formed in a surface of the cement bottom, and optionally, also formed in an interior surface of the cement walls, of the concrete basin during construction thereof.

Further objects and features of the subject disclosure will be apparent from the description and the claims below.

### Brief Description of the Drawings

The subject disclosure will now be described in more detail with reference to the appended drawings in which:
Figure 1 is a schematic side cross-section view of a power plant with a seawater based gas cleaning system;
Figure 2 is a schematic side cross-section view illustrating a first embodiment of an effluent seawater treatment system in accordance with the subject disclosure;
Figure 3 is a schematic top view illustrating a second embodiment of the effluent seawater treatment system of Figure 2;
Figure 4 is a schematic side cross-section view illustrating the second embodiment of Figure 3;
Figure 5 is a top view illustrating a third embodiment of the effluent seawater treatment system of Figure 2;
Figure 6 is a schematic side cross-section view illustrating the third embodiment of Figure 5;
Figure 7 is a top view illustrating a fourth embodiment of the effluent seawater treatment system of Figure 2;
Figure 8 is a schematic side cross-section view illustrating the fourth embodiment of Figure 7; and
Figure 9 is a schematic side cross-section view illustrating a fifth embodiment of a treatment basin of the effluent seawater treatment system of Figure 2.

### Detailed Description

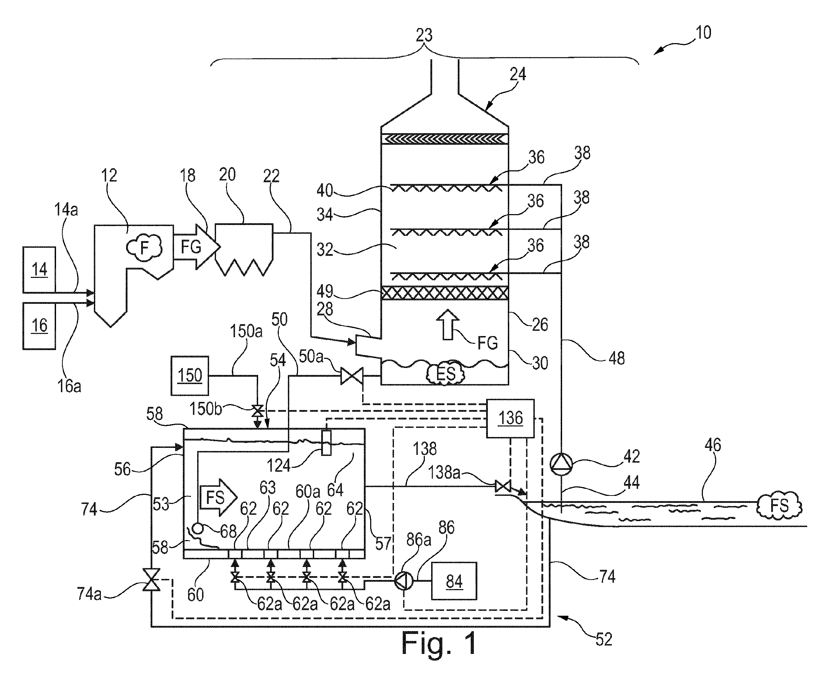

Illustrated in Figure 1 is a schematic side cross-section view of a power plant 10. Power plant 10 comprises a boiler 12 in which a fuel F, such as coal, oil, peat, natural gas, or waste, supplied from a fuel source 14 via feeding pipe 14a is combusted in the presence of oxygen, supplied from an oxygen source 16 via oxygen supply duct 16a. Oxygen may, for example, be supplied in the form of air and/or in the form of a mixture of oxygen gas and recirculated gases, in case boiler 12 is a so-called "oxy-fuel" boiler. The combustion of fuel F in boiler 12 generates a hot process gas in the form of a flue gas FG. Sulfur species contained in the fuel F upon combustion form, at least partly, sulfur dioxide, SO₂, which forms part of the flue gas FG.

The flue gas FG flows from boiler 12 via a fluidly connected duct 18, to an optional dust removal device 20. A dust removal device 20, such as an electrostatic precipitator as described in US 4,502,872, serves to remove dust particles from the flue gas FG. As an alternative, another type of dust removal device 20 may be used, such as for example, a fabric filter as described in US 4,336,035.

Flue gas FG from which most of the dust particles have been removed, flows from the dust removal device 20 via a fluidly connected duct 22 to a seawater flue gas desulfurization system 23 seawater scrubber 24. Seawater scrubber 24 comprises a wet scrubber tower 26. An inlet 28 is arranged at a lower portion 30 of wet scrubber tower 26. Duct 22 is fluidly connected to inlet 28 such that flue gas FG flowing from dust removal device 20 via duct 22 enters interior 32 of wet scrubber tower 26 via inlet 28.

After entering interior 32, flue gas FG flows vertically upward through wet scrubber tower 26, as indicated by arrow FG. Central portion 34 of wet scrubber tower 26 is equipped with a number of spray arrangements 36 arranged vertically one above each other. In the example of Figure 1, there are three such spray arrangements 36, and typically there are 1 to 20 such spray arrangements 36 in a wet scrubber tower 26. Each spray arrangement 36 comprises a supply pipe 38 and a number of nozzles 40 fluidly connected to each supply pipe 38. Seawater supplied via supply pipes 38 to nozzles 40 is atomized by means of nozzles 40 and contacts in interior 32 of wet scrubber tower 26, the flue gas FG for absorption of sulfur dioxide, SO₂, therefrom.

A pump 42 is arranged for pumping fresh seawater FS via fluidly connected suction pipe 44 from ocean 46, and forwarding the fresh seawater FS via fluidly connected pressure pipe 48 to fluidly connected supply pipes 38.

In accordance with an alternative embodiment, fresh seawater FS supplied by pump 42 to supply pipes 38 may have been previously utilized as cooling water in steam turbine systems (not shown) associated with boiler 12 prior to such fresh seawater FS being utilized as scrubbing water in seawater scrubber 24.

Seawater atomized by nozzles 40 in interior 32 of wet scrubber tower 26 flows downwardly within wet scrubber tower 26 and absorbs sulfur dioxide from flue gas FG flowing vertically upwardly within interior 32 of wet scrubber tower 26. As a result of such absorption of sulfur dioxide by the seawater, the fresh seawater FS gradually turns into effluent seawater ES as it flows downwardly within interior 32 of wet scrubber tower 26. Effluent seawater ES is collected in lower portion 30 of wet scrubber tower 26 and is forwarded, via fluidly connected effluent pipe 50, from wet scrubber tower 26 to an effluent seawater treatment system 52.

In accordance with an alternative embodiment, the seawater scrubber 24 may comprise one or more layers of a packing material 49 arranged within interior 32 of wet scrubber tower 26. Packing material 49 may be made from plastic, steel, wood, or another suitable material for enhanced gas-liquid contact. With packing material 49, nozzles 40 merely distribute fresh seawater FS over packing material 49, rather than atomizing the fresh seawater FS. Examples of packing material 49 include Mellapak^{™} (available from Sulzer Chemtech AG, Winterthur, CH) and Pall^{™} rings (available from Raschig GmbH, Ludwigshafen, DE).

Effluent seawater treatment system 52 comprises an effluent seawater treatment basin 54. Effluent seawater treatment basin 54 comprises an upstream wall 56, opposed side walls 58 (illustrated herein break-away), a downstream wall 57 and a bottom 60. The periphery 61 of bottom 60 is integrally formed with or attached to each of the upstream wall 56, the opposed side walls 58 and the downstream wall 57. The distance between opposed side walls 58 is at least approximately 20 meters to approximately 40 meters. The distance between opposed upstream wall 56 and downstream wall 57 is approximately 30 meters to approximately 50 meters. Bottom 60 of basin 54 comprises at least one but preferably a plurality of channels 62 in surface 60a thereof. Fresh seawater FS is supplied to treatment basin 54 from a fresh seawater source or ocean 46. As such, fresh seawater FS is supplied from the fresh seawater source or ocean 46 via pipe 74 through fluidly connected upstream wall 56 of treatment basin 54 for a flow of fresh seawater FS from upstream wall 56 of treatment basin 54 downstream toward opposed downstream wall 57. Near or adjacent to upstream wall 56 is an effluent seawater distribution pipe 68. Effluent seawater distribution pipe 68 is fluidly connected to effluent pipe 50, from wet scrubber tower 26. Effluent seawater distribution pipe 68 is arranged horizontally extending perpendicular to and between opposed side walls 58 of treatment basin 54 parallel to upstream wall 56. Effluent seawater distribution pipe 68 comprises a plurality of apertures 68a throughwhich effluent seawater ES from scrubber tower 26 flows into fresh seawater FS contained in interior 64 of treatment basin 54. As such, the flow of fresh seawater FS from upstream wall 56 to opposed downstream wall 57 carries the flow of effluent seawater ES from apertures 68a downstream toward downstream wall 57. In bottom 60, a plurality of channels 62 extend approximately parallel from one to the other between opposed side walls 58. As an option, one or more channels 62 may also extend from bottom 60 at least a distance D partially up opposed side walls 58. Each of the channels 62 are covered with a perforated cover 80 comprising a plurality of perforations 82 extending through the thickness T thereof. Each covered channel 62 is fluidly connected to a common supply pipe 86 fluidly connected to an oxidation agent source 84. Oxidation agent source 84 supplies air, oxygen or other source of oxygen as an oxidation agent OA through supply pipe 86 to covered channels 62 in treatment basin 54. As such, each covered channel 62 comprises a perforated cover 80 comprising a plurality of perforations 82 therethrough, which air, oxygen or other source of oxygen as an oxidation agent OA flows through into the fresh seawater FS and effluent seawater ES contained in interior 64 of treatment basin 54. The air, oxygen or other source of oxygen as an oxidation agent OA flows out of channels 62 through perforations 82 at a pressure of approximately 30 kPa to approximately 50 kPa (approximately 4.35 psi to approximately 7.25 psi) so as to contact and mix with the flow of effluent seawater ES carried in fresh seawater FS within treatment basin 54. Through the mixing of effluent seawater ES into a flow of fresh seawater FS and aeration thereof with an oxidation agent OA as described herein, a relatively small treatment basin 54 provides for improved mixing and aeration efficiency of effluent seawater therein with a decrease in water pressure drop as compared to prior art systems described above.

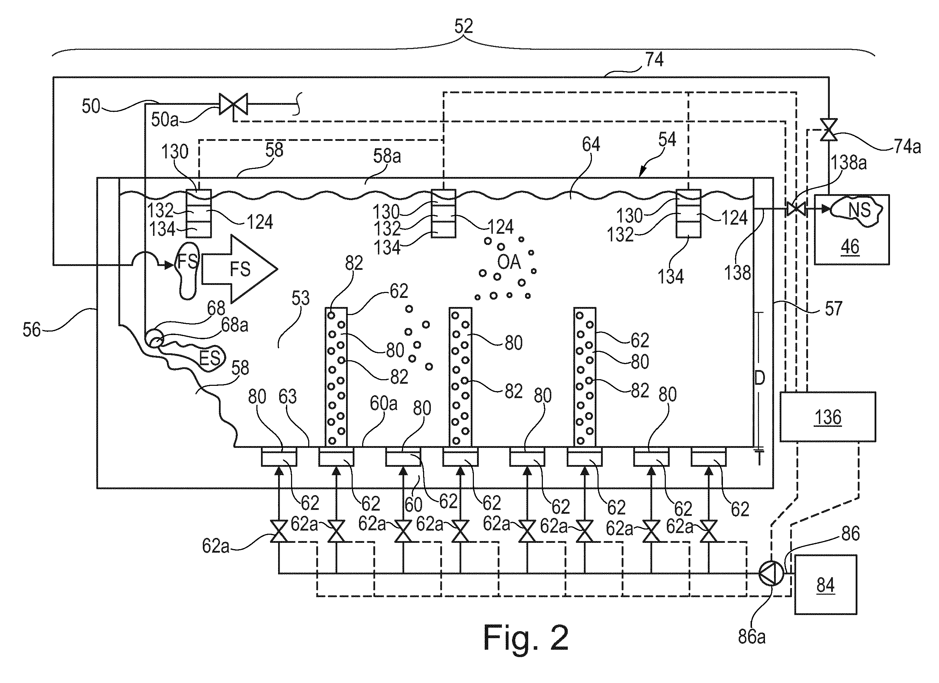

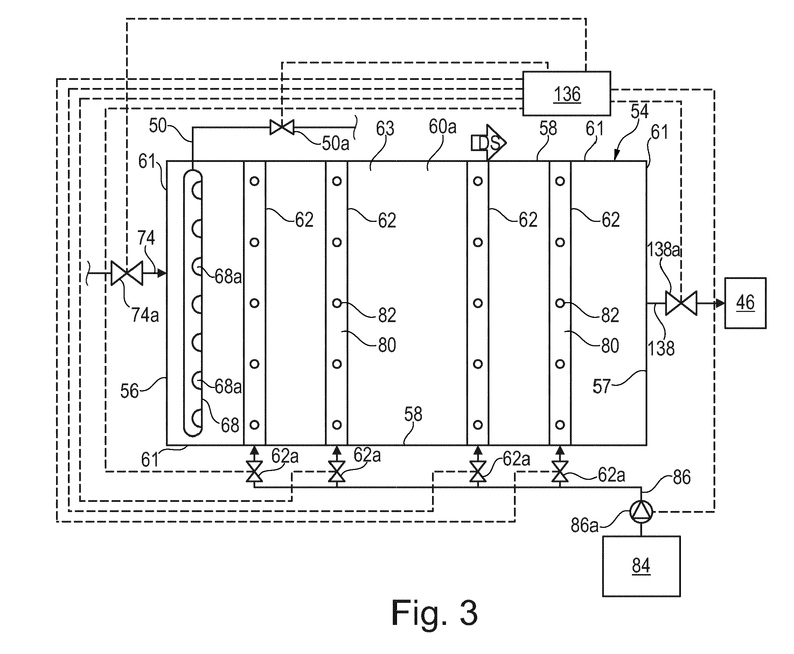

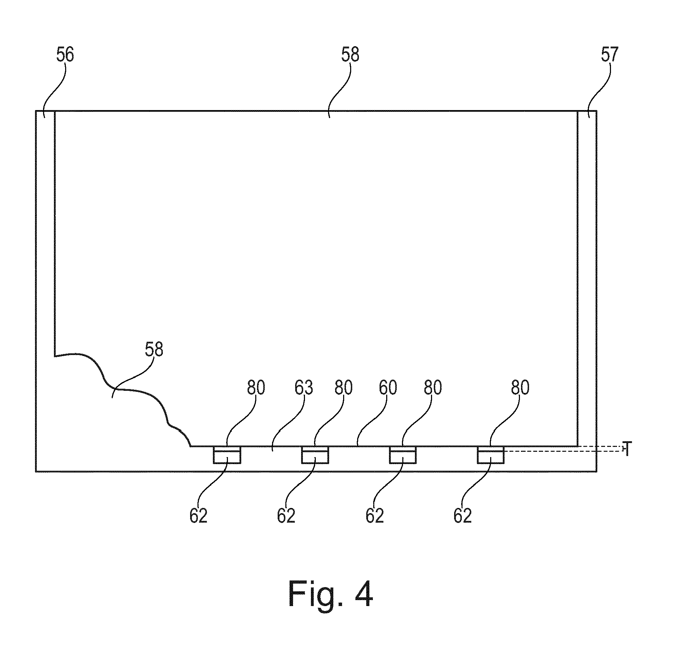

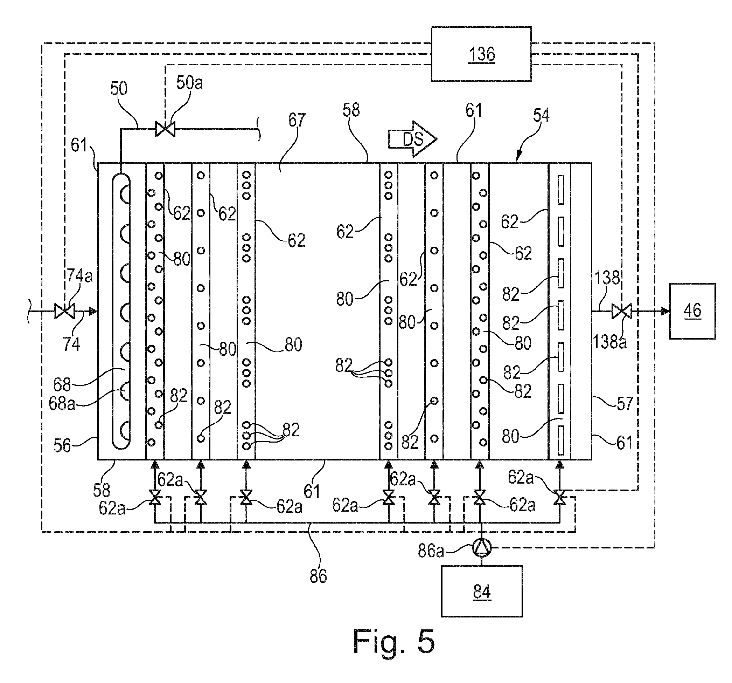

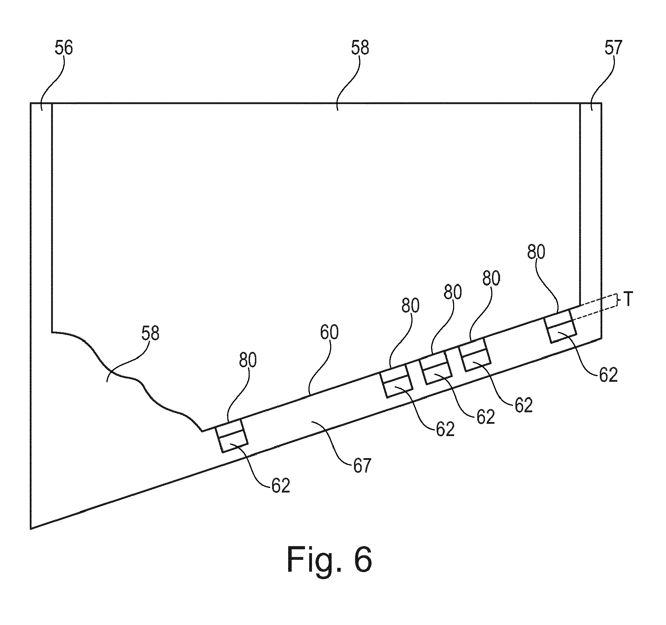

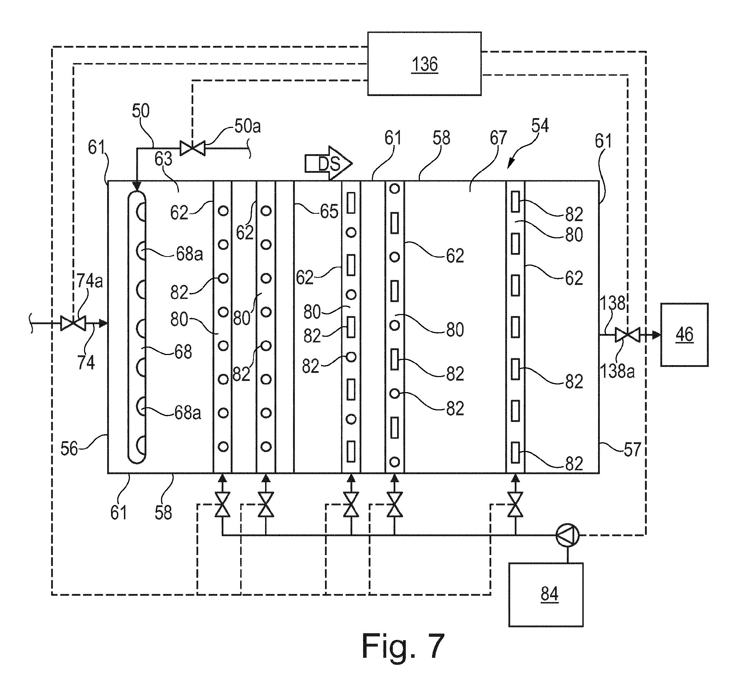

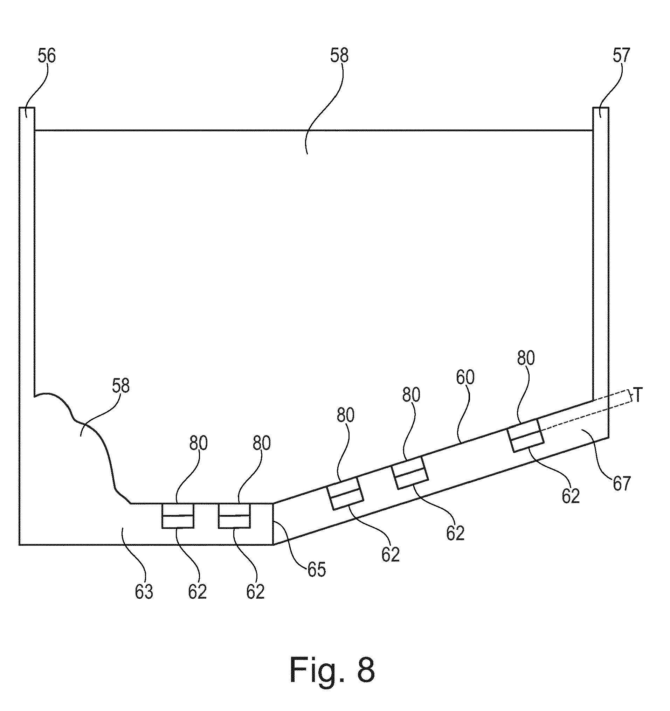

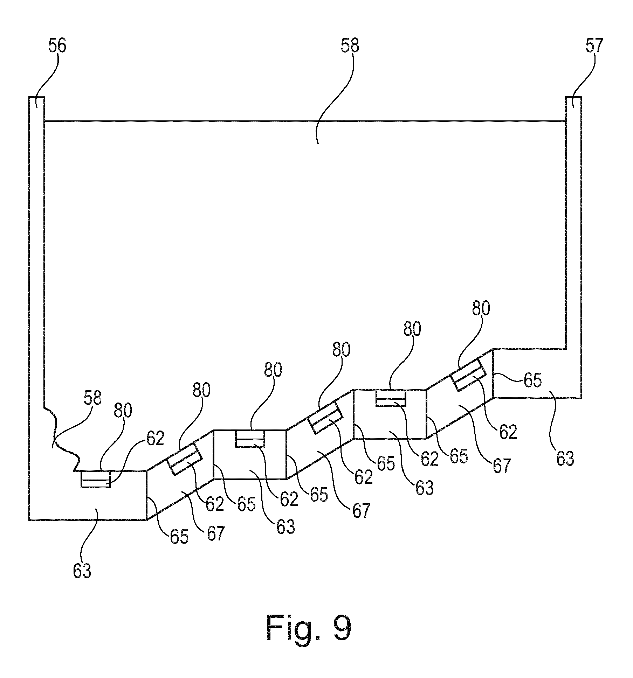

Illustrated in Figure 2 is the subject effluent seawater treatment system 52 in more detail. In the subject effluent seawater treatment system 52, effluent seawater ES is supplied to treatment basin 54 via the plurality of apertures 68a in effluent seawater distribution pipe 68. Effluent seawater distribution pipe 68 is horizontally arranged adjacent to and parallel to upstream wall 56 in a bottom area 53 of treatment basin 54 arranged vertically below pipe 74. Effluent seawater ES flowing from apertures 68a is mixed with and carried downstream toward downstream wall 57 by the flow of fresh seawater FS from the fresh seawater source or ocean 46 supplied to treatment basin 54 via pipe 74. The mixing flow of effluent seawater ES and fresh seawater FS is contacted by air, oxygen or other oxygen source as an oxidation agent OA spraying from perforations 82 of perforated covers 80 covering channels 62 in bottom 60 and, as an option, also from opposed side walls 58. Treatment basin 54 is constructed so that each of the channels 62 is spaced apart from and parallel to each of the other channels 62. As best illustrated in Figures 3-9, perforations 82 in each of the perforated covers 80 covering each of the channels 62 in flat bottom area 63 (Figures 3 and 4) may be aligned with the perforations 82 of the other perforated covers 80, perforations 82 in each of the perforated covers 80 covering each of the channels 62 in inclined bottom area 67 (Figures 5 and 6) may be misaligned or staggered with perforations 82 of the other perforated covers 80, or perforations 82 in each of the perforated covers 80 covering each of the channels 62 in flat bottom area 63 and inclined bottom area 67 (Figures 7, 8 and 9) may be random with perforations 82 of the other perforated covers 80 when moving in a downstream direction represented by arrow DS. Also illustrated in Figures 7, 8 and 9, bottom 60 comprises a flat bottom area 63 contacting at seam 65 an inclined bottom area 67. If desired, bottom 60 may comprise multiple flat bottom areas 63 with inclined bottom areas 67 therebetween for a stair-stepped bottom 60 as illustrated in Figure 9. Through the mixing of effluent seawater ES into a flow of fresh seawater FS and oxidation thereof with an oxidation agent OA sprayed through perforations 82, a relatively small treatment basin 54, provides for improved mixing and oxidation efficiency of effluent seawater ES therein with a decrease in water pressure drop, a decrease in operating expense, a decrease in capital investment, and an increase in treatment basin 54 design flexibility as compared to prior art systems described above. In the subject effluent seawater treatment basin 54 effluent seawater ES is treated to produce neutralized effluent seawater NS for release thereof to the ocean 46 via return pipe138 using control valve 138a.

The chemical reactions occurring in wet scrubber tower 26 and in effluent seawater treatment system 52 will now be described in more detail. The absorption of sulfur dioxide in interior 32 of wet scrubber tower 26, illustrated in Figure 1, is assumed to occur according to the following reaction:

SO₂ (g) + H₂O = > HSO₃⁻ (aq) + H⁺ (aq) [eq. 1.1 a]

The bisulfite ions, HSO₃⁻, may, depending on the pH value of the effluent seawater ES, dissociate further to form sulfite ions, SO₃²⁻, in accordance with the following equilibrium reaction:

HSO₃⁻ (aq) <=> SO₃²⁻ (aq) + H⁺ (aq) [eq. 1.1 b]

Hence, as an effect of the absorption of sulfur dioxide, the effluent seawater ES will have a lower pH value as an effect of the hydrogen ions, H⁺, generated in the absorption reaction, than that of the fresh seawater FS from the ocean 46, and will contain bisulfite and/or sulfite ions, HSO₃⁻ and SO₃²⁻, respectively. Bisulfite and/or sulfite ions are oxygen demanding substances, and the release thereof to the ocean 46 is restricted.

In the effluent seawater treatment system 52, oxygen gas, O₂(g), contained in the air, oxygen or other source of oxygen supplied as an oxidation agent OA via covered channels 62 to treatment basin 54 is dissolved in the mixing fresh seawater FS and effluent seawater ES within the treatment basin 54 interior 64.

O₂ (g) <=> O₂ (aq) [eq. 1.2a]

The bisulfite and/or sulfite ions, HSO₃⁻ and/or SO₃²⁻, are oxidized, at least partly, by reaction with the dissolved oxygen, in accordance with the following reactions:

HSO₃⁻ + H⁺ + ½ O₂ (aq) = > SO₄²⁻ + 2H⁺ [eq. 1.2b]

SO₃²⁻ + 2H⁺ + ½ O₂ (aq) = > SO₄²⁻ + 2H⁺ [eq. 1.2c]

Hence, as an effect of absorption of sulfur dioxide, and oxidation of the sulfite, hydrogen ions, H⁺, are generated in the effluent seawater ES. The mixed effluent seawater comprises calcium carbonate, CaCO₃, which functions as an alkali to react with and neutralize the hydrogen ions, H⁺. The neutralization could occur according to the following chemical reaction scheme. In a first step of the neutralization reaction, the carbonate ion, CO₃²⁻, reacts with one hydrogen ion, and forms a bicarbonate ion, HCO₃⁻:

CO₃²⁻ + H⁺ <=> HCO₃⁻ [eq. 2.1]

The formed bicarbonate ion, HCO₃⁻, may then react with a further hydrogen ion, H⁺, to form carbon dioxide, CO₂, in a dissolved state:

HCO₃⁻ + H⁺ <=> CO₂(aq) + H₂O [eq. 2.2]

Finally, the dissolved carbon dioxide, CO₂ (aq), is released to the atmosphere in gas form:

CO₂(aq) <=> CO₂(g) [eq. 2.3]

All of the neutralization reactions, [eq. 2.1 to 2.3], are equilibrium reactions. That means that the complete route, from carbonate, CO₃²⁻, to carbon dioxide, CO₂, in gas form will be rate limited by the slowest step. Of the neutralization reactions above, eq. 2.1 is the fastest, and eq. 2.2 is the slowest. Hence, eq. 2.2 will normally determine the rate at which hydrogen ions may be neutralized in the effluent seawater treatment system 52 to produce neutralized effluent seawater NS with a pH and dissolved oxygen concentration suitable for release back to ocean 46.

Government regulatory requirements regarding neutralized effluent seawater NS deemed acceptable for return to the ocean 46 often follow parameters including:
i) a sufficiently low amount of oxygen consuming substances, which is often referred to as the COD (chemical oxygen demand);
ii) a sufficiently high amount of oxygen; and
iii) a suitable pH.
As such, in a seawater scrubber 24 of the type illustrated in Figure 1, the concentration of oxygen consuming substances, COD, normally correlates very well to the concentration of sulfite in the effluent seawater ES. Using one or more water quality sensors 124, each with a sulfite detecting element 130, an oxygen detecting element 132, and a pH detecting element 134, as best illustrated in Figure 2, variations in the sulfite concentration, the oxygen concentration, and the pH, along effluent seawater treatment system 52 can be monitored and controlled.

The dissolution of oxygen in the effluent seawater ES, the oxidation of sulfite, and the neutralization of formed hydrogen ions to restore pH to produce neutralized effluent seawater NS, are each governed by interactions between the chemical reactions. Control unit 136, depicted in Figures 1 through 3, 5 and 7, receives electronic signals from each of the one or more water quality sensors 124, and controls each control valve 50a in effluent pipe 50, control valve 74a in fresh seawater FS pipe 74, blower 86a and supply valves 62a in supply pipe 86, and control valve 138a in return pipe 138, to control effluent seawater treatment system 52 to ensure the produced neutralized effluent seawater NS meets regulatory requirements for oxygen content, COD and pH prior to release in ocean 46.

As an example according to the subject method, sulfite detecting element 130 in first upstream most water quality sensor 124, registers sulfite concentrations too high in comparison to a predetermined sulfite value. Electronic signal transmissions are illustrated herein by the broken lines, as for example, as illustrated between water quality sensors 124 and control unit 136 in Figure 2. While the sulfite concentration measured by the second or third water quality sensors 124 may very well be within regulatory limits, there is a distinct risk that there may not be sufficient time to neutralize all hydrogen ions, H⁺, formed according to eq. 2.1 to 2.3, since hydrogen ion formation extends throughout effluent seawater treatment system 52. When the control unit 136 receives such information from the water quality sensors 124, it may control the blower 86a to allow more oxidation agent OA to be supplied to the effluent seawater ES. Optionally, one or more independently controlled control valves 62a may be adjusted to increase the supply of oxidation agent OA to the treatment basin 54 via supply pipe 86. Optionally, control valve 74a may be adjusted to increase the supply of fresh seawater FS to the treatment basin 54 via pipe 74. Optionally, control valve 50a may be adjusted in effluent pipe 50 to decrease the supply of effluent seawater ES supplied to treatment basin 54. As an effect of an increased supply of oxidation agent OA, an increase supply of fresh seawater FS and/or a decreased supply of effluent seawater ES, the sulfite concentration and the sulfate concentration are restored to their normal or desired concentrations.

As an example according to the subject method, sulfite detecting elements 130 of water quality sensors 124, measure a sulfite concentration relatively low already at a first upstream most water quality sensor 124. While the sulfite concentration, the oxygen concentration and the pH as measured by the third downstream most water quality sensor 124 is likely to be within the regulatory limits, there is a distinct risk that too much oxygen containing gas is being supplied to the effluent seawater ES, causing an increased amount of energy to be consumed by blower 86a. When the control unit 136 receives such information from water quality sensors 124, it may control the blower 86a so less oxidation agent OA is supplied to the effluent seawater ES. Optionally, one or more independently controlled control valves 62a may be adjusted to decrease the supply of oxidation agent OA to the treatment basin 54 via supply pipe 86. Optionally, control valve 74a may be adjusted to decrease the supply of fresh seawater FS via pipe 74. Optionally, control valve 50a may be adjusted in effluent pipe 50 to increase the supply of effluent seawater ES. As an effect of a decreased supply of oxidation agent OA, a decreased supply of fresh seawater FS and/or an increased supply of effluent seawater ES, the sulfite concentration and the sulfate concentration are restored to their normal or desired concentrations.

As an example according to the subject method, oxygen detecting elements 132 of water quality sensors 124, register an oxygen concentration that is too low. Such a low concentration of oxygen is likely to reduce the rate of sulfite oxidation, potentially causing a risk that the concentration of sulfite in the effluent seawater ES may exceed regulatory limits, and/or that the pH in the effluent seawater ES may get too low. When the control unit 136 receives such information from the water quality sensors 124, it may control blower 86a to allow more oxidation agent OA to be supplied to the effluent seawater ES. Optionally, one or more independently controlled control valves 62a may be adjusted to increase the supply of oxidation agent OA to the treatment basin 54 via supply pipe 86. As an effect of such increased supply of oxygen agent OA, the oxygen concentration is restored to its normal value.

As an example according to the subject method, oxygen detecting elements 132 of water quality sensors 124, register an oxygen concentration that is too high. Such a high concentration of oxygen indicates that too much of the oxygen containing gas is supplied to the effluent seawater ES, thus causing an increased amount of energy consumption by blower 86a. When the control unit 136 receives such information from water quality sensors 124, it may control blower 86a such that less oxidation agent OA is supplied to the effluent seawater ES. Optionally, one or more independently controlled control valves 62a may be adjusted to decrease the supply of oxidation agent OA to the treatment basin 54 via supply pipe 86. As an effect of such decreased supply of oxygen, the oxygen concentration is restored to its normal value.

As an example according to the subject method, pH detecting elements 134 of water quality sensors 124, register a pH value that is too low. Such a low pH for the neutralized effluent seawater NS may not be acceptable for release to the ocean 46. When the control unit 136 receives such information from the water quality sensors 124, it may control the blower 86a such that more air, oxygen or other oxygen source as an oxidation agent OA is supplied to the effluent seawater ES. The supplied air, oxygen or other oxygen source OS has the effect of improving the gasification and subsequent removal of carbon dioxide, CO₂, from the effluent seawater ES according to eq. 2.3 set forth above. Such removal of gaseous CO₂ improves the speed of neutralization of hydrogen ions according to eq. 2.1 and 2.2 set forth above. As an effect of such increased supply of air, oxygen or other oxygen source as an oxidation agent OA, the pH value is restored to its normal value.

As an example according to the subject method, pH detecting elements 134 of water quality sensors 124, register a pH value that is at a suitable level for neutralized effluent seawater NS release to the ocean 46 already at the second water quality sensor 124 arranged between the other two water quality sensors 124 within treatment basin 54 in contact with effluent seawater ES therein. While the pH value is within the regulatory limits, there is a distinct risk that too much air is being supplied to the effluent seawater ES, causing an increased amount of energy to be consumed by blower 86a. When the control unit 136 receives such information from water quality sensors 124, it may control the blower 86a such that less air, oxygen or other oxygen source as an oxidation agent OA is supplied to the effluent seawater ES. As an effect of such reduced supply of air, oxygen or other oxygen source as an oxidation agent OA, the pH value is restored to a more desirable normal value.

Hence, as illustrated through the above examples, control unit 136 controls, based on information/signals from water quality sensors 124, effluent seawater treatment system 52 for efficient operation thereof.

The control unit 136 may also be used for continuously supervising the sulfite concentration, and/or the oxygen concentration, and/or the pH value along the length of treatment basin 54 of effluent seawater treatment system 52, and for adjusting the supply of oxidation agent OA, the supply of fresh seawater FS, and/or the supply of effluent seawater ES via blower 86a, control valves 62a, control valve 74a and/or control valve 50a, respectively. In this manner, process variations such as for example, varying concentrations of sulfur dioxide in the flue gas FG generated by boiler 12, varying boiler loads, varying oxidation conditions due to, for example, varying temperatures, varying concentrations of oxidation catalyzing dust particles in the flue gas FG, and the like can be taken into account and adjusted for in the effluent seawater treatment system 52 for efficient operation thereof. It is also possible, as an alternative, to utilize control unit 136 only during start-up of the effluent seawater treatment system 52, to tune operation thereof. Further, all such effluent seawater treatment system 52 adjustments could be made manually, as an alternative to automatic control by control unit 136.

As still a further example according to the subject method, oxygen detecting elements 132 of water quality sensors 124 register an oxygen concentration that is too low. Such a low concentration of oxygen is likely to reduce the rate of sulfite oxidation, potentially causing a risk that the concentration of sulfite in the effluent seawater ES may exceed regulatory limits, and/or that the pH in the effluent seawater ES may get too low. When the control unit 136 receives such information from the water quality sensors 124, it may control addition of an oxidation enhancing substance to the effluent seawater treatment system 52 from an oxidation enhancing substance source 150 via pipe 150a. The oxidation enhancing substance could be an oxidation enhancing catalyst, such as iron, Fe, manganese, Mn, cobalt, Co, or copper, Cu. Furthermore, the oxidation enhancing substance may also be an oxidizing enzyme. An example of the latter is a sulfite oxidase type of enzyme. A sulfite oxidase may be prepared in accordance with the teachings of the article *"*Optimization of expression of human sulfite oxidase and its molybdenum domain" by CA Temple, TN Graf, and KV Rajagopalan, published in Arch. Biochem. Biophys. 2000 Nov 15; 383(2):281-7. As such, the amount or use of oxidation catalyst, and/or the amount or use of oxidation enzyme, as the case may be, is controlled electronically by control unit 136 adjustment of valve 150b in pipe 150a to obtain the desired oxidation rate.

In summary, the subject method of treating effluent seawater ES generated in removing sulfur dioxide from a process gas by contacting the process gas containing sulfur dioxide with seawater comprises supplying fresh seawater FS to a treatment basin 54 for a flow thereof downstream through an effluent seawater treatment system 52, supplying the effluent seawater ES to the treatment basin 54 for a flow of the effluent seawater ES in the flow of fresh seawater FS, distributing an oxidation agent OA from covered channels 62 in bottom 60 of the basin 54 at a pressure of approximately 30 kPa to approximately 50 kPa (approximately 4.35 psi to approximately 7.25 psi) to contact the flow of effluent seawater ES mixed in the fresh seawater FS prior to environmental release thereof such as in ocean 46. As such, the effluent seawater ES is supplied to the basin 54 from an effluent seawater distribution pipe 68 horizontally arranged parallel to upstream wall 56 vertically below the supply of fresh seawater FS from pipe 74. The oxidation agent OA for the subject method is one or more members selected from the group consisting of air, oxygen, and an oxygen source. The subject method of using an effluent seawater treatment basin 54 provides pH recovery with decarboxylation and oxygenation to produce neutralized effluent seawater NS for environmental release such as to ocean 46. Further to the method, one or more water quality sensors 124, are arranged in one or more locations in contact with the effluent seawater within treatment basin 54, for use to control the effluent seawater ES treatment. As such, a control unit 136 receives signals from the one or more water quality sensors 124, arranged within treatment basin 54, and based on the signals received, controls the effluent seawater ES treatment by adjusting one or more parameters of effluent seawater ES treatment.

In summary, the subject effluent seawater treatment system 52 for treating an effluent seawater ES generated in a wet scrubber 24 in which a process gas is brought into contact with seawater for removal of sulfur dioxide from said process gas, the effluent seawater treatment system 52 comprising a basin 54 comprising a fresh seawater supply 46 supplying fresh seawater FS at an upstream wall 56 of the basin 54 for downstream flow thereof within the basin 54, an effluent seawater ES supplied from scrubber tower 26 to effluent seawater distribution pipe 68 horizontally arranged vertically below the fresh seawater supply pipe 74 parallel to the upstream wall 56 of the basin 54 for supplying effluent seawater ES in an upward flow into the downstream flow of fresh seawater FS, and an oxidation agent supply 84 arranged as channels 62 formed in a concrete bottom 60 of the basin 54 for oxidation agent OA release into and contact with the flow of effluent seawater ES in the basin 54 to produce therefrom neutralized effluent seawater NS prior to environmental release thereof. As such, the effluent seawater ES is supplied to the basin 54 via an effluent seawater distribution pipe 68 with a plurality of perforations 68a therethrough horizontally arranged adjacent and parallel to the upstream wall 56 of the basin 54 for effluent seawater ES supply to the basin 54. The oxidation agent OA supplied to the basin 54 is one or more members selected from the group consisting of air, oxygen, and an oxygen source. Further, the oxidation agent supply 84 is fluidly connected to one or more channels 62 extending between opposed side walls 58 of the basin 54, with each such channel 62 covered with a perforated cover 80 comprising perforations 82 through the thickness T thereof for release of oxidation agent OA through the perforations 82 and into the effluent seawater ES flowing in the basin 54. As such, the flow of the fresh seawater FS, effluent seawater ES and oxidation agent OA within the basin 54 provides pH recovery with decarboxylation and oxygenation to produce therefrom neutralized effluent seawater NS for environmental release. Also used in the basin 54 are one or more water quality sensors 124 arranged in contact with the effluent seawater ES within the basin 54 for use to control effluent seawater treatment. Accordingly, a control unit 136 receives electronic signals from the one or more water quality sensors 124 arranged in contact with the effluent seawater ES within the basin 54, and based on the signals received by the control unit 136 from the one or more water quality sensors 124, the control unit 136 controls one or more parameters of effluent seawater treatment. For efficiency and to reduce costs associated with the subject treatment basin 54, oxidation agent OA is supplied to the basin 54 through channels 62 formed in a surface 60a of the cement bottom 60, and optionally, also formed in an interior surface 58a of the cement opposed side walls 58, of the concrete basin during construction thereof.

While the subject method and system have been described with reference to a number of preferred embodiments, it will be understood by those skilled in the art that various changes may be made and equivalents may be substituted for elements thereof without departing from the scope thereof. In addition, many modifications may be made to adapt a particular situation or material to the teachings hereof without departing from the essential scope. Therefore, it is intended that the subject method and system not be limited to the particular embodiments disclosed as the best mode contemplated, but rather include all embodiments falling within the scope of the appended claims. Moreover, the use of the terms first, second, etc. do not denote any order or importance, but rather the terms first, second, etc. are used to distinguish one element from another.

## Claims

1. A method of treating effluent seawater generated in removing sulfur dioxide from a process gas by contacting the process gas containing sulfur dioxide with seawater comprising:
supplying fresh seawater to a basin for a flow thereof downstream through the basin;
supplying the effluent seawater to the for a flow of the effluent seawater in the flow of fresh seawater; and
spraying an oxidation agent from one or more channels arranged within a concrete bottom of the basin for oxidation agent contact with the flow of effluent seawater to produce neutralized effluent seawater prior to environmental release thereof.

2. The method of claim 1, wherein the effluent seawater is supplied to the basin from an effluent seawater distribution pipe horizontally arranged within the basin, vertically below supply of the fresh seawater to the basin.

3. The method of claim 1, wherein the oxidation agent is one or more members selected from the group consisting of air, oxygen, and an oxygen source.

4. The method of claim 1, wherein the basin comprises a bottom that is flat, flat and inclined or inclined.

5. The method of claim 1, wherein within the basin, fresh seawater, effluent seawater and oxidation agent are mixed to provide pH recovery with decarboxylation and oxygenation to produce neutralized effluent seawater for environmental release.

6. The method of claim 1, wherein one or more water quality sensors are arranged within the effluent seawater in the basin for use to control one or more parameters of effluent seawater treatment.

7. The method of claim 1, wherein a control unit receives signals from one or more water quality sensors arranged within effluent seawater in the basin and based on the signals received, controls one or more parameters of effluent seawater treatment.

8. An effluent seawater treatment system for treating an effluent seawater generated in a wet scrubber in which a process gas is brought into contact with seawater for removal of sulfur dioxide from the process gas, the effluent seawater treatment system comprising:
a basin comprising a fresh seawater supply supplying fresh seawater at an upstream wall of the basin;
an effluent seawater supply distribution pipe horizontally arranged vertically below the fresh seawater supply parallel to the upstream wall of the basin supplying effluent seawater for an upward flow thereof into the downstream flow of fresh seawater;
an oxidation agent supply supplying oxidation agent from one or more channels formed in a concrete bottom of the basin for oxidation agent release into and contact with the flow of effluent seawater in the basin to produce neutralized effluent seawater prior to environmental release thereof.

9. The system of claim 8, wherein the effluent seawater supply is an effluent seawater distribution pipe with a plurality of perforations therethrough horizontally arranged adjacent and parallel to the upstream wall of the basin for effluent seawater supply through the perforations to the basin.

10. The system of claim 8, wherein the oxidation agent is one or more members selected from the group consisting of air, oxygen, and an oxygen source.

11. The system of claim 8, wherein the one or more channels extend between opposed side walls of the basin, each channel covered with a perforated cover comprising perforations therethrough for release of oxidation agent through the perforations and into the effluent seawater in the basin.

12. The system of claim 8, wherein the flow of the fresh seawater, effluent seawater and oxidation agent within the basin provides pH recovery with decarboxylation and oxygenation to produce neutralized effluent seawater for environmental release.

13. The system of claim 8, wherein one or more water quality sensors are arranged in contact with the effluent seawater in the basin for use to control one or more parameters of effluent seawater treatment.

14. The system of claim 8, wherein a control unit receives signals from one or more water quality sensors arranged in contact with the effluent seawater in the basin, and based on the signals received from the one or more water quality sensors, the control unit controls one or more parameters of effluent seawater treatment.

15. The system of claim 8 wherein the oxidation agent supply is fluidly connected to one or more channels formed in a surface of the cement bottom, and optionally, also formed in an interior surface of the cement walls, of the concrete basin during construction thereof.
